**Europäisches Patentamt**

**European Patent Office**

**Office européen des brevets**

(19)

(11) Veröffentlichungsnummer : **0 091 979 B2**

(12) # NEUE EUROPÄISCHE PATENTSCHRIFT

(45) Veröffentlichungstag der neuen Patentschrift :
04.12.91 Patentblatt 91/49

(51) Int. Cl.⁵ : **H04B 14/06, H04N 7/13**

(21) Anmeldenummer : **82103296.8**

(22) Anmeldetag : **20.04.82**

(54) Bereichsprädiktives Code-Modulationsverfahren mit signaladaptiv reduzierter bit-Rate.

Die Akte enthält technische Angaben, die nach dem Eingang der Anmeldung eingereicht wurden und die nicht in dieser Patentschrift enthalten sind.

(43) Veröffentlichungstag der Anmeldung :
26.10.83 Patentblatt 83/43

(45) Bekanntmachung des Hinweises auf die Patenterteilung :
30.12.86 Patentblatt 86/52

(45) Bekanntmachung des Hinweises auf die Entscheidung über den Einspruch :
04.12.91 Patentblatt 91/49

(84) Benannte Vertragsstaaten :
DE FR GB IT

(56) Entgegenhaltungen :
EP-A- 0 012 632
DE-A- 3 020 061
NACHRICHTENTECHNIK ELEKTRONIK, Band 31, Nr. 4, April 1981, Seiten 143-145, Ost-Berlin, DL. W.ZÜHLKE: " DPCM mit variabler Wortlänge für die Fernsehbildcodierung"
IEEE Transactions on Information Theory, Bd. IT-22, Nr. 5, Sept. 1976, S. 573-579
IEEE Transactions on Communications, Bd. COM-23, Nr. 4, Apr. 1975, S. 474-478

(73) Patentinhaber : Kehler, Waldemar, Dipl.-Ing.
Silcherstrasse 20
W-7204 Wurmlingen (DE)

(72) Erfinder : Kehler, Waldemar, Dipl.-Ing.
Silcherstrasse 20
W-7204 Wurmlingen (DE)

EP 0 091 979 B2

## Beschreibung

### I)Verfahrens-Beschreibung

Die Erfindung beschreibt ein bereichsprädiktives Code-Modulationsverfahren als Weiterentwicklung eines in der deutschen Offenlegungsschrift DE-A1-3 020 061 beschriebenen mehrfach adaptiven (D)PCM-Quantisierung-Verfahrens, mit dessen Hilfe hier signaladaptiv reduzierte bit-Raten erzielt werden sollen.

### 1. Sland der Technik

### 1.1. Differenz Puls Code Modulation

Konvetionelle prädiktive Verfahren, wie insbesondere die Differenz-Puls-Code-Modulation (DP C M). beruhen auf einer punktuellen Signalwert-Vorhersage. Um diesen Prädiktions-Wert herum wird sekundär eine von der Übertragungs-Rate abhängige Anzahl diskrete Abweichungs-Werte gelegt. Sie werden binär codiert. Die zutreffende Abweichung wird mittels Codewort des repräsentativen diskreten Abweichungswertes übertragen.

### 1.2. Der gesteuerte Quantisierer

Eine Verbesserung stellt der gesteuerte Quantisierer nach Musmann dar. Dabei ist die bekannte Aktivität (Varianz) eines Bild-Gebietes das Steuer-Kriterium für einen von üblicherweise drei verschieden breiten Kennlinien-Bereichen. Literatur: ZÜRICH-SEMINAR ON DIGITAL COMMUNICATIONS, 1974 TAGUNGSPAPIERE.

### 1.3. Die adaptive DPCM

Eine wesentliche Verbesserung stellt die adaptive (DPCM) (ADPCM) dar. Die auf subjektiven Erfahrungen beruhende Fehler-Toleranz wird hierbei genutzt, um signaladaptiv primär davon abhängige Schrittweiten festzulegen. Diese werden nach dem Prinzip des gesteuerten Quantisierers zu Kennlinien-Bereichen zusammengefaßt. Aus den verschiedenen subjektiv demnach zulässigen primären Schrittweiten-Gruppierungen resultieren bei fester Übertragungsrate (konstante Stufenzahl) sekundär Quantisierungsbereiche unterschiedlicher Weite. Man kann die Verfahren 1.2. und 1.3. geradezu als durch Quantisierungs-Bereiche gekennzeichnet darstellen.
Literatur: Erdmann, W.-D. ; EIN AN DIE WAHRNEHMBARKEITSEIGENSCHAFTEN DES MENSCHLICHEN AUGES ANGEPAßTER, GESTEUERTER QUANTISIERER FÜR BILDSIGNAL (DISS. TU HANNOVER, 1979).

### 1.4. Elimination unmöglicher Werte, Unsymmetrie

Eine weitere Verbesserung kann erreicht werden, indem in der Nähe der absoluten Signalbereichs-Grenzen die zum Prädiktions-Wert unmöglichen Abweichungen, wegen Bereichs-Überschreitung, gar nicht berücksichtigt werden. Dies wird, entsprechend der Auslegeschrift DE-B-2 124 060. ebenfalls genutzt (vgl. dort, Spalte 3, Zeilen 8 bis 12): Nähert sich eine Prädiktion einer Bereichs-Grenze. so werden dazwischenliegende Werte weniger wahrscheinlich als in entgegengesetzter Richtung. Das ist eine neue Basis für eine unsymmetrische Kennlinie.

### 1.5. Die mehrfach adaptive Quantisierung (DE-A1 -3 020 061 )

Die « REDUNDANZMINDERNDE, MEHRFACH ADAPTIVE QUANTISIERUNG EINES WERTEBEREICHS, BESONDERS GEEIGNET ZUR OPTIMIERTEN CODIERUNG UND DECODIERUNG VON (D)PCM-SIGNALEN BEI FESTER BIT-RATE » gemäß DE-A1 3 020 061, weicht erstmals davon ab, daß nur ein meist durch (gewichtete) Mittelwetbildung bestimmter Prädiktions-Wert ermittelt wird, um den herum dann sekundär (aus Stufungs-Kriterien gewonnen) ein Quantisierungs-Bereich gelegt wird. Insbesondere wird darin eine zur konventionellen Prädiktion versetzte Abweichungg-Prädiktion beschrieben, die allerdings die zentrale Rolle der konventionellen Prädiktion noch nicht konsequent genug verläßt.

### 1.6. Kritik: die Schwäche der Verfahren 1.2. bis 1.5.

Die Verfahren 1.1. bis 1.4. arbeiten durchweg mit einer punktuellen Prädiktion. Sie verwenden. schallüngstechnisch gesehen. stets nur einen, Prädiktor. Alle Verfahren, einschließliCh 1.5.. versagen regelmäßig. wenn der vorgesehene Quanlisierungs-Bereich überschritten wird. Eine scharfe extreme Schwarz-Weiß-Kante in einem Bild ist mit den genannten Verfahren keinesfalls darstellbar. Schon weniger extreme Situationen verursachen « slope overload » : Eine hohe Sprung-Funktionen wird erst nach mehreren Abtast-Intervallen approximiert. Solche Sprung-Funktionen enthalten jedoch immer eine besonders relevante Anderungs-Information. In Bild-Folgen bilden Sprünge in Form von Kanten meist den natürlichen Rand zwischen zueinander wesensfremden Bildgebieten. Ihre Vorhersage ist aber aus vorhergehenden Bildern sehr weitgehend möglich.

### 2. Neue Aspekte und Möglichkeiten

Aus einem Signalverlauf ist als Erwartungsmenge die Menge aller relevanten divergierenden (Erwartungs-) Parameter extrahierbar, um damit einen entsprechend seiner (durch Minimum und Maximum festgelegten) Größe reduzierten quantisierbaren Erwartungsbereich zu definieren.

Es erscheinen nun Codes denkbar, welche die Codewort-Längen direkt an der Weite infrage kommender Bereiche von Erwartungsmengen und dazu fremden Restmengen orientieren.

In der technischen Realisation kann jedoch nur gelten daß mindestens zwei Erwartungs-Parameter (auch die Prädiktionen im konventionellen Sinne) die Erwartungsmenge festzulegen (zu zentrieren) helfen. Der Begriff ist ausschließlich signal- und wahrscheinlichkeitsbezogen.

### 2.1. Erwartungs-Bereich, Erwartungs-Menge, ideale Erwartungs-Menge

Erstmals wird nunmehr als Alternative zu 1., die primäre Festlegung einer aus einem vorhersehbaren Signal-Bereich (=Erwartungs-Bereich) hervorgehenden Erwartungs-Menge (für Signal-Werte) ermöglicht. Ein Erwartungs-Bereich bedarf zu seiner Festlegung, anders als ein konventioneller Pradiktions-Wert, mindestens zwei (vorhersehbare) Parameter. Diese werden von mehreren Funktionen bzw. einer (mehrparametrigen) Erwartungs-Funktion geliefert. die vom konventionellen Prädiktions-WERT unabhänig ist. indem sie letzteren höchstens als einen von mehrerem Parametern benutzt. Erst sekundärfolgt daräus eine Bereichs-Quantisierung.

Die ideale Erwartungs-Menge eines Erwartungs-Bereichs für das Signal wird sogar alle irgendwie aus einem Signal ermittelbaren divergierenden Vorhersagen berücksichtigen.

### 2.2. Redundanz konventioneller Verfahren

Der Unterschied zwischen dem oben beschriebenen Quantisierung-Bereich und einer BereichsQuantisierung eines Erwartungs-Bereichs für das Signal zeigt Redundanz auf, denn meist kann der zweite Bereich kleiner ausfallen.

### 2.3. partielle Nutzung

Gemäß der DE-A1 -3 020 061 wird, bei fester bit-Rate, die Redundanz zwischen den Verfahrensweisen zur Optimierung von gem. 1.4. ermittelten Quantisierungs-(Werte-) Bereichen genutzt. Erwartungs-Bereiche sind noch nicht definiert.

### 2.4. Weg zur Reduktion der Übertragungs-Rate: ideale Erwartungs-Mengen

Die Nutzung o.g. Redundanz zur Reduktion der (mittleren) Übertragungs-Rate liegt nahe, ist aber in der DE-A1 3 020 061 nocht nicht als Anwendungs-Möglichkeit jenes zum Teil schon bereichsprädiktiven Verfahrens genannt. Hier soll die Erfindung Abhilfe schaffen, indem sie Wege zur Reduktion der bit-Rate aufzeigt. Zudem muß der noch ungenauen Interpretation einer Erwartungs-Menge gemäß der DE-A1 3 020 061 die Vorstellung entgegengesetzt werden. daß aus quasiperiodischen Signalen technischer Anwendungsfälle annähernd ideale Erwartungs-Mengen vorhersehbar sind, wie oben beschrieben. Zugrundegelegt werden muß dabei die ausreichend schnelle Abrufbarkeit der gesamtenrelevanten Signal-Entwicklung innerhalb eines ausreichend langen Zeitraums. Bei Bild-Folgen sind dies insbesondere die vorhergehenden bilder (vgl. 4.1.).

### 2.5. prinzipielle Grenzen prädiktiver Verfahren

Unvorhersehbarkeiten absoluter Aet können keinesfalls Gegenstand irgendeines prädiktiven Verfahrens sein und bleiben entsprechend auch hier unberücksichtigt.

Die Entwicklung ausreichend großer und schneller Speicher bildet jedenfalls die Grundlage für die Weiterentwicklung der prädiktiven Verfahren.

### 3. Das neue Verfahren

### 3.1. Das Hauptmerkmal der Erfindung

Neue Speichertechniken erlauben den schnellen Zugriff auf große Signal-Datenmengen und deren rasche Verarbeitung. Die näherungsweise Ermittlung von idealen Erwartungs-Mengen ist damit auch für komplexe Signal-Verläufe möglich geworden. Während der Begriff Erwartungs-Menge noch Subjektive Definitions-möglichkeiten offen läßt, ist die ideale Erwartungs-Menge derart zu sehen. daß sie alle nur denkbaren divergierenden Parameter und sonst aus dem' Signal-Verlauf technisch extrahierbaren Erwartungs-Funktionen berücksichtigt. Letztere lassen sich zu einer einzigen mehrparametrigen Funktion zusammenfassen.

Zwecks Reduktion der Übertragungsrate wird dabei als wesentlichste Gegebenheit der unterAbschnitt 2 beschriebene Unterschied zwischen dem konventionellen Quantisierungs-Bereich und einem meist wesentlich engeren idealen Erwartungs-Bereich bzw. der zugehörigen idealen Erwartungs-Menge nutzbar (Anspruch 1).

### 3.2. Die technische Realisation

Die Patent-Ansprüche sind. ebenso wie die Verfahrens-Beschreibung, als anschaulich von idealen Erwartungs-Mengen ausgehend zu verstehen. In der technischen Realisation kann jedoch nur gelten. daß mindestens zwei Erwartungs-Parameter (auch die Prädiktionen im konventionellen Sinn) die Erwartungs-Menge festzulegen helfen (zentrieren). Subjektive Aspekte, auch wenn sie von Signal-Gegebenheiten abhängen (vgl. ADPCM), sind ebensowenig
« Erwartungs-Parameter » wie irgendwelche technischphysikalische Gegebenheiten bei der Auswertung oder ein vom Anwender z. B. festgelegter
Gesichts-punkt. Der Begriff ist ausschließlich signal-
und wahrscheinlichkeitsbezogen. Selbstverständlich
wird auch das neue Verfahren bereits bekannte Techniken. zur zusätzlichen Redundanz-Verringerung.
insbesondere die möglichkeit subjektiv zulässiger
Schrittweiten, nebenher nutzen müssen. um eine
Code-Optimierung zu erreichen (Anspruch 4).

4. Realisierungs-Fälle

4.1. Eine Erwartungs-Menge im statischen Fall

Bei Video-Aufzeichnungen kann primär aus jeder
orthogonalen Richtung (x, y, t) eine gezielte Prädiktion versucht werden. Zusätzlich kann nach konventionellem Muster eine Art (gewichteter)
Mittelwert-Prädiktion aus den Umgebungs-Punkten
gemacht werden. Der Streu-Bereich all dieser Werte
liefert eine praktisch ideale Erwartungs-Menge,
solange innerhalb eines hinreichend weiten Beobach
tungs-Kegels längs der Zeit-Achse keine Bewegung
erkannt wird. Jeder darüber hinausgehende Quantisierungs-Bereich nach konventionellem Muster ist
entsprechend redundant. Die in dies Fall scheinbar
ausreichende exakte Abschätzung nur entlang der
Zeit-Achse, die dabei sogar je einen punktuellen Prädiktions-Wert liefert, wird durch Rausch-Effekte meist
verhindert (Ansprüche 1, 4).

4.2. Erwartungs-Parameter einer Bewegung

Wird Bewegung erkannt. so bleibt der Charakter
jener Erwartungs-Menge erhalten. Diese kann aber
dann insgesamt nur noch eine nichtideale bzw. eine
mögliche Erwartungs-Menge sein. Immerhin läßt sich
auch die Änderungs-Tendenz der Bewegung anhand
vorhergehender Bilder feststellen und als weiterer
Erwartungs-Parameter einbringen (Anspruch 5).

4.3. Redundante Symmetrie

Der Erwartungs-Bereich für die Änderung ergibt
die in DE-A1 -3 020 061 schon erwähnte generelle
Abkehr von redundanter Symmetrie (Anspruch 5).

4.4. Der ideale Schwarz-Weiss-Sprung

Die fiktive Annahme einer in Realität ja tatsächlich sehr scharfen, bewegten Schwarz-Weiss-Kante
läßt nun auch in anderer Hinsicht die Nützlichkeit der
Definition eines idealenErwartungs-Bereichs und
einer idealen Erwartungsmenge erkennen. Für eine
bewegungsgefährdete Prädiktions-Adresse mit den aktuellen Bildpunkt-Koordinaten würde der ideale
Erwartungs-Bereich alle Werte zwischen Schwarz
und . Weiß enthalten. Die ideale Erwartungsmenge
der bewegten, scharfen Kante besteht nun jedoch
ausschließlich aus den beiden Werten Schwarz und
Weiss, ist damit also nach der neuen Erfindung mit
nur einem bit codierbar (Ansprüche 1 bis 4).

4.5. Die ideale dynamische Erwartungs-Menge

Die genannte Schwarz-Weiß-Kante liefert eine
ideale dynamische Erwartungs-Menge die hier theoretisch mit nur zwei Werten auskäme. Sie wird im
Falle unscharfer Kanten Repräsentätiv Werte enthalten müssen. die einen Erwartungs-Bereich abdecken,
was praktisch stets der Fall Sein wird (Ansprüche 1
bis 4).

4.6. Superpositions-Prinzip

Hier wurde ein Unterschied zur in 4.1. beschriebenen Definition deutlich, die nunmehr als ideale statische Erwartungs-Menge umgedeutet werden kann.
Aus den beiden Definitionen der statischen- und der
dynamischen Erwartungs-Menge ließe sich wiederum eine ideale Gesamt-Erwartungsmenge herleiten (Ansprüche 1 bis 4).

4.7. Rest-menge innerhalb einer Erwartungs-Menge

Der Fall der idealen Kante läßt auch erkennen,
daß durchaus eine « Rest-Menge » innerhalb eines
Erwartungs-Bereichs bzw. zwischen den verschiedenen Werten einer Erwartungs-menge liegen darf
(Anspruch 2).

4.8. Das Versagen der konventionellen prädiktiven
Codierungs-Verfahren

An dem Fall der bewegten idealen Schwarz-
Weiss-Kante wird aber auch deutlich. daß konventionelle Verfahren derartige Fälle gar nicht codieren.
Erst bereichsprädiktive Verfahren eröffnen nun solche Möglichkeiten vom prinzip her. Besonders deutlich verhält sich die Bereichs-Prädiktion der
konventionellen nur punktuellen Prädiktion in all
jenen Fällen überlegen, bei denen ein Streuungs-
Maß angegeben werden kann, das ja jede arithmetische Mittelwert-Bildung mathematisch sinnvoll
ergänzt. Dies eröffnet bei der Berechnung von Prädiktionswerten konventioneller Art eine zusätzliche Möglichkeit. Üblicherweise läßt sich der Streuung zudem
noch eine Vorzugs-Richtung zuordnen, wie bereits
erklart worden ist.

4.9. Der Anwendungs-Bereich des neuen Verfahrens

Bildfolgen lassen eine sehr anschäuliche Erklärung der erwähnten Fakten. Definitionen und möglichkeiten zu. Es erscheint jedoch wichtig, darauf hinzuweisen. daß die Beschreibungen auf alle quasiperiodischen Vorgänge anwendbar sind. Oszillosko-Bilder machen dies (als Bildfolge) besonders deutlich.

4.10. Die Rest-menge

Neben dem Fall verschiedener Erwartungsmengen gemäß 4.1. bis 4.5. tritt nun insbesondere die zu einer Erwartungs-Menge fremde Rest-Menge als weitgehend frei wählbarer Parameter-Satz auf. Die Rest-Menge ist dort von dominierender Bedeutung, wo die Wahrscheinlichkeit für Signalwerte außerhalb der Erwartungs-Menge groß ist. Ihre Nützlichkeit sei hier am Beispiel einer sehr engen Erwartungs-Menge erklärt : In einer quasi-rauschfreien Bildfolge sind oft viele Bild-Anteile statisch. Im jedem nicht als bewegungsgefährdet angesehenen Punkt reduziert sich die ideale statische Erwartungs-Menge auf den lokalen Signal-Wert des vorigen Bildes (vgl. I, 4.1.). Liegt der Signalwert des aktuellen Bildes gleich. so genügt die Übertragung der Dual-Ziffer « 1 » eines Kennungs-Bits. Andernfalls kann nach dem inversen Kennungs-Bit « 0 » - für die Rest-menge ein Lokalisierungs-Codewort übertragen werden (Ansprüche 1 bis 3).

5. Unterschiede

5.1. Der Unterschied zu den konventionellen Verfahren gemäss Abschnitt 1.

Eine Bereichs-Prädiktion unterscheidet sich grundlegend von der Festlegung von Quantisierungs-Bereichen konventioneller DPCM-Verfahren. Dort liefert ein nur punktueller Prädiktion-Wert jenen zentralen Stütz-Pfeiler, um den herum nach zweckmäßigen Kriterien ein Quantisierüngs-Bereich (für Abweichungen davon) aufgebaut wird. Dessen Bereichs-Weite hängt noch nicht unmittelbar von einer erwarteten Steuung ab. Insbesondere liegt neben dem Prädiktions-Wert in jenem Quantisierungs-Bereich kein weiterei unmittelbarer Erwartungs-Parameter vor.

5.2. Der Unterschied zu DE-A1-3 020 061

In der DE-A1 -3 020 061 erscheint primär noch der punktuelle Prädiktions-Wert im Zentrum eines Quantisierungs-Bereichs. Letzterer wird dort konventionell gemäß 1.3. (ADPCM) ermittelt. Sekundär wird eine Abweichungs-Vorhersage versucht. Diese verschiebt den ursprünglich festgelegten Quantisierungs-Bereich daraufhin in Richtung der Abweichung. Auf den deraet verschobenen Sekundär-Quantisierungs-Bereich werden dann erneut die Verfahren gemäß 1.3. angewandt. Die methode wurde daher mehrfach adaptive (D) PCM genannt.

Diese spezielle Aet einer Abweichungs-Vorhersage ist ebensogut bezüglich übertragener PCM-Stützwerte, interpolierend anwendbar (D daher geklammert). Die implizite. recht spezielle Doppel-Prädiktion jener Erfindung ist schon der erste Schritt zu einer allgemeinen Bereichsprädiktion. Sie ist aber nur eine von vielen möglichkeiten. In jener Anmeldung werden auch praktisch erstmals über weitere Erwartungs-Parameter « Erwartungs-mengen » erzeugt. Diese müssen dort aber noch nicht von zuvor dazu festgelegten Erwartungs-Bereichen ausgehen.

Das neue Verfahre geht erfindungsgemäß den umgekehrten Weg. legt also primär den Erwartungs-Bereich fest. woraus eine Bereichs-Quantisierung sekundär folgt. Von willkürlichen Zusatz-Parametern abgesehen, die auch technisch öder subjektiv bedingt sind, wird nun gemäß 2.1. vorgegangen: Die quantisierte Erwartungs-Menge folgt aus dem Erwartungs-Bereich.

II. Beispiele

Gültinge Einfügung in die Beschreibung der europäischen patentschrift
(auf Seite 2, zwischen Abschnitt 2. und 2.1.)
(vorgeschlagen von der Einspruchsabteilung mit Bescheid vom 04.12.1989, mit der Zustimmung des Patentinhabers vom 16.12.1989)

1. Vorhersehbar statische Bild-Gebiete und diesbezügliche Vorhersage-Fehler

1.1. Der Grenzfall : ein bit Übertragungs-Rate

Als erstes Anwendungs-Beispiel sei der unter 1, 4.10. genannte Fall erwähnt: In einer quasirauschfreien Bildfolge sind oft viele Bild-Anteile statisch. In jedem nicht als bewegungsgefährdet angesehenen Punkt reduziert sich die ideale statische Erwartungs-Menge auf den lokalen Signal-Wert des vorigen Bildes (vgl. I, 4.1.). Der Definition einer Erwartungs-Menge bedarf es also nicht mehr. wenn sich der Erwartungs-Bereich auf einen Prädiktions-Punkt reduziert : Liegt der Signalwert des aktuellen Bildes gleich, so genügt die Übertragung der Dual-Ziffer « 1 » eines Kennungs-Bits. Als idealer Grenzfall ist mit dem neuen Verfahren, bei Rauschfreiheit. ein bit Übertragungs-Rate nötig (Ansprüche 1 bis 4).

1.2. Der Abbau von Rausch-Anteilen

Der genannte Idealfall beschreibt die übliche physikalische Realität noch vor der Verfälschung durch irgendeine Ubertragungs-Strecke.

In der Übertragungs-Praxis steht dem Idealfall das Grundrauschen (z. B. das Filmkorn) meist entgegen. Stellt man dann zwei bit zur Verfügung, so läßt sich dieses, insbesondere das durch diskrete Werte entstehende Quantisierungs-Rauschen, sukzessiv von Bild zu Bild abbauen (bekannte Mittelwert-Bildung, wie z. B. auch beim « trägen » Auge), solange die Bild-Gebiete statisch sind. Dann tritt aber wieder der soeben genannte Fall aus Beispiel 1.1. ein (Ansprüche 1 bis 4).

### 1.3. Das unerwartete Auftreten einer Restmenge, Codewort-Längenprädiktion

Wie erwähnt, sind Unvorhersehbarkeiten nicht die Stärke prädiktiver Verfahren. Gegebenenfalls kann nach einem inversen Kennungs-Bit (0) für die Rest-Menge ein Lokalisierungs-Codewort übertragen werden. Als Codierung genügt dann jene der Verfahren I, 1.1. bis 1.4. Der Unterschied zu konventioneller DPCM wird jedoch klar, sofern nun im Anschluß an ein Kennungsbit Lokalisations-Codes unterschied licher Länge vorgesehen werden. So können. je nach Signal-Zustand z. B. für die Lokalisation innerhalb der Erwartungs-menge ein bis drei, für die Rest-Menge umgekehrt vier bis zwei bitvorgesehen werden.

Dies liefe auf eine Codewort-Längenprädiktion hinaus, die nach konventioneller Vorgehensweise entfallen muß. Hier kann die Sicherheit der Abschätzung für das Auftreten von Erwartungs-Mengen gegen Übertragungsbits aufgerechnet werden, besonders innerhalb der mit hoher Sicherheit statischen Bild-Gebiete (Ansprüche 1 bis 4).

### 1.4. Gesteuerte Codewort-Länge

Prinzipiell läßt sich der Grad der Näherung in einer Erwartung-Menge stufen:
a) « 1.. » bedeute : Erwartungs-Menge wurde erreicht ; danach Sukzessiv:
b) « 11. » bedeute: Erwartungs-Kernmenge wurde erreicht; und ggf. noch
c) « 111 » bedeute : (Prädiktions-)Wert (bei enger Toleranz) wurde erreicht.

Jede Codewort-Null ließe nun auch noch die Deutung eines Rest-mengen-Charakters innerhalb einer Erwartungs-Menge zu. Dies wiederum könnte implizieren, daß der Code für jede Null um ein bit verlängert wird. Dabei wird die Wahrscheinlichkeit gegen Übertragungsbits aufs Spiel gesetzt (Ansprüche 1. 3).

### 1.5. Reiner Restmengen-Code

Signalisiert ein Kennungs-Bit, daß ein enger (tolerabler) Erwartungs-Bereich in statischen Bild-Gebieten verfehlt wurde, so wird ein reiner Restmengen-Code anschließend übertragen. Praktisch noch wichtiger erscheint jedoch jener Fall, in dem eine Statische Erwartungs-Menge Mit hoher Wahrscheinlichkeit nicht erreicht wird, weil mit Sicherheit eine Bewegungs-Front (dynamische Erwartungs-Menge als Rest-menge gesehen) eintrifft (Ansprüche 1 bis 4, 6).

### 2. Das Auftreten einer vorhersehbaren dynamischen Erwartungs-Menge

### 2.1. Sprung-Funktionen. die Bild-Kante

Vorhersehbare Ereignisse zeigen die Stärke eines prädiktiven Verfahrens:

Die zweite Gruppe von Beispielen betrifft Sprung-Erwartungen (bzw. auch eine Art Rampen-Funktion), Sobald bewegte Kanten die Pradiktions-Adresse des aktuellen Bild-Punktes gefährden. Ein extremes Beispiel wurde unter I. 4.4. angegeben. Praktisch liegt meistens der Fall vor daß eine dynamische Erwartung-Menge rechts oder links von der statischen Erwartungs-Menge auftaucht. Da eine bewegte Kante aus den vorangegangenen Bildern fast stets erkennbar ist, steht die Richtung der zu erwartenden Abweichung damit fest. Hier zeigt sich die zusätzliche Redundanz aller herkömmlicherweise symmetrisch um einen Prädiktionswert herum operierenden Verfahren. selbst bei fester Übertragungs-Rate. da die Abweichungs-Erwartung gerichtet (positiv oder negativ) sein wird. Im Idealfall ist damit bei jenen Verfahren und fester Übertragungs-Rate schon ein bit redundant (Anspruch 5).

### 2.2. Dynamische menge als Restmenge

Natürlich kann jede dynamische Erwartungs-Menge auch als zur statischen komplementär betrachtet werden. Damit wäre sie diesbezüglich die zu erwartende Rest-menge, Die Kante nicht S-W-Kante (Beispiel 2.1) ist die Grenze dieser beiden Mengen. (Ansprüche 1 bis 3, 6).

### 2.3. Die bewegte ideale Schwarz-Weiss-Kante (I, 4.4.)

Die scharfe, bewegte Schwarz-Weiss-Kante zeigt die Nützlichkeit des neuen Verfahrens und der hierfür benutzten Definitionen am besten :

Der ideale Erwartungs-Bereich enthält alle Werte zwischen Schwarz und Weiß. Die ideale Erwartungs-Menge der bewegten scharfen Kante besteht nun jedoch ausschließlich noch aus den beiden Werten Schwarz und Weiss, ist damit also nach der neuen Erfindung mit nur einem bit codierbar, wo andere prädiktive Verfahren gemäß I, 1. 6. generell versagen.

2.4. Die Übertraguns-Realität der bewegten realen Schwarz-Weiss-Kante (I, 4.5.)

Die ideale bewegte Schwarz-Weiß-Kante ergäbe eine ideale dynamische Erwartungs-Menge, die hier theoretisch mit nur zwei Werten auskäme. Sie wird im Falle unscharfer Kanten Repräsentativ-Werte enthalten müssen, die einen Erwartungs-Bereich - z.B. um die Kanten herum - abdecken (Ansprüche 1. 3. 4).

2.5. Variable Codewort-Längen

Es erscheinen nun Codes denkbar, welche die Codewort-Längen direkt an der Weite infrage kommender Bereiche der Erwartungs- und Rest-mengen orientieren (Ansprüche 3, 4).

2.6. Trennung in statische-, dynamische- und Rest-Mengen

Es sind auch Codes möglich, die nun für jede Mengen-Art unterschiedliche Bit-Kennungen und Codewort-Längen vorsehen (Ansprüche 3, 4).

3. PCM-Stützwerte

Das Verfahren eignet sich besonders dort, wo, aufbauend auf PCM-Stützwerten, prädiktive Verfahren zur bit-sparenden Reduktion der Übertragungs-Rate quasi interpolierend angewandt werden. Umgekehrt können PCM-Stützwerte auch als Rest-mengen-Code interpretiert und signalbedingt abgerufen werden, sobald z. B. ein Kennungs-Bit dies signalisiert. In turbulenten Bild-Gebieten erscheint solches sinnvoll (Anspruch 5).

4. Kombinationen mit anderen Verfahren

Eine Kombination mit verwandten Codier-Verfahren erscheint ebenso sinnvoll möglich. Erfindungsgemäß ist hauptsächlich der Pradiktions-Teil (= technische Vorhersage) einer DPCM-Schaltung betroffen, indem die Erfindung anstelle der bisherigen Mono-Pradiktion Mengen definiert.

**Patentansprüche**

1. Prädiktives Quantisierungsverfahren zur Codierung eines Wertebereichs, der bezüglich eines definierten kriteriums in eine Erwartungsmenge hoher Auftrittswahrscheinlichkeit und in eine Restmenge niedriger Auftrittswahrscheinlichkeit eingeteilt ist, dadurch gekennzeichnet, daß bei Signal-**Datenmengen**, also einer Mengeneinheit gespeicherter Signalpunkte, ein **Bereich** für deren Werte zur Nutzung eines dadurch festgelegten Quantisierungsbereichs bestimmt wird, und zwar durch Erzeugung

a) einer **Erwartungsmenge** für Signalwerte, die alle nur denkbaren **divergierenden** Parameter und sonst aus dem Signalverlauf technisch extrahierbaren Erwartungsfunktionen berücksichtigt, um damit einen entsprechend seiner durch Minimum und Maximum festgelegten Größe **reduzierbaren Erwartungsbereich für eine Signalmenge** zu definieren, dessen signaladaptive Weite (Größe, Streuung) auf bekannte Art,
– speziell mit PCM oder DPCM -
– speziell durch Wahl der Quantisierungswerte entsprechend den Häufungen von Signalwerten (Häufungspunkten), wie sie insbesondere durch die zwei Sprungkanten eines Signals (Konturen) gegeben sein können -
sofern sich dies nicht durch Entartung des bereichs zum Punkt erübrigt,
quantisiert wird;
b) einer entsprechend festzulegenden, im Sinne der Mengenlehre zur Erwartungsmenge fremden **Restmenge** für Signalwerte, die im prädiktiven Fehlerfall mögliche restliche Werte berücksichtigt und auch ganz oder teilweise innerhalb des Erwartungsbereichs liegen kann.

2. Bereichsprädiktives Quantisierungsverfahren nach Anspruch 1, gekennzeichnet durch
a) eine ausschließliche Ansteuerung des Erwartungsbereichs für Signalwerte in Form einer codierbaren Erwartungsmenge;
b) eine ausschließliche Ansteuerung der Restmenge;
c) eine besteuerung der Erwartung- und Restmenge von allgemein verschiedener Größe;
insbesondere zwecks Realisierung dementsprechend unterschiedlicher Codewort-Längen.

3. Bereichsprädiktives Quantisierungs-Verfahren nach Anspruch 2, gekennzeichnet durch die Übertragung
a) eines reinen, auch sukzessiv bereichsabhängigen. Erwartungsmengen-Codes.
b) eines reinen, auch sukzessiv bereichsabhängigen. Restmengen-Codes für eine von jener Erwartungs-Menge abhängigen Rest-Menge,
c) eines entsprechend den signaladaptiv bedingten Mengen-Größen gemischten Godes von prinzipiell variabler Länge.

4. Bereichsprädiktives Quantisierungs-Verfahren nach Anspruch 3. dadurch gekennzeichnet. daß die Codewort-länge reduziert wird, indem entweder gemeinsam oder für sich allein
a) bei (sukzessiv) korrekt abgeschätztem tolerablen Erwartungs-Bereich auf unnötige Präzisierung. insbesondere durch weitere Übertragungs-Bits, verzichtet wird,
b) abhängig von einer variablen Weite des Erwartungs- bzw. Rest-Bereichs die Codewort-längen entsprechend variieren,

c) abhängig von subjektivem oder physikalischem bzw. technischem Erfordernis anderer Art. insbesondere auch willkürlich, zwecks Quantisierung ein Stufungs-Prinzip zur Anwendung kommt. das auf dem Erwartungs- und dem Restmengen-Prinzip aufbaut. wobei eine Erwartungsmenge grundsätzlich auf mindestens zwei Erwartungs-Parametern (Prädiktionen) beruht.

5. Bereichsprädiktives Quantisierungs-Verfahren nach einem der Ansprüche 2 bis 4, gekennzeichnet durch

a) eine Kombination mit PCM-Verfahren,

b) eine Kombination mit einer nur tendenziellen oder punktuellen Abweichungs-Vorhersage. die bezüglich irgendeiner Erwartungs-Menge erfolgt.

c) eine fallabhängige oder alternierende Kombination oder Auswahl von a) und b).

6. Bereichsprädiktives Quantisierungs-Verfahren nach einem der Ansprüche 1 bis 5, dadurch gekennzeichnet, daß inverse Definitionen der Mengen bzw. ihrer Codierungen derart geschaffen werden. daß ein Signal-Wert nicht innerhalb einer Erwartungs-Menge erwartet wird, also ein Wert mit hoher Wahrscheinlichkeit innerhalb der Rest-Menge liegt.

## Claims

1. PREDECTIVE QUANTIZING METHOD for coding a RANGE of VALUES which is classified according to a defined criterion in an EXPECTED QUANTITY, a set of high occurance probability, and a RESIDUAL QUANTITY, a set of low occurance probability, characterized by
the determination of the RANGE of values for SIGNAL DATA QUANTITIES meaning a unit of the set of stored signal point values, to utilize a thereby defined quantizable range, the QUANTIZATION RANGE, by forming

a) an EXPECTED QUANTTITY for the signal values, taking into consideration all possible diverging parameters as well as other predictive functions technically obtainable from a signal development, to define thereby
an EXPECTED RANGE for a SIGNAL QUANTITY reducible according to the size limited by its MINIMUM and MAXIMUM, to quantize its signal adaptive width (range, variance) by known methods, especially by

  – PCM or DPCM -

  – selecting the quantizing values according to the cumulations of signal values (points of cumulation), as in particular may be represented by the two signal values at an edge (contour) -

  unless this is not necessary due to the fact the range degenerates to become a single point;

b) a correspondingly created RESIDUAL QUANTITY for signal values, in the sense of the set theory extraneous to the EXPECTED QUANTITY, the residual quantity considering possible RESIDUAL VALUES in the case of failing predictions and being allowed to lie totally or partly within the EXPECTED RANGE.

2. RANGE PREDICTIVE QUANTIZING METHOD according to claim 1, characterized by

a) an exclusive selection of elements lying within the EXPECTED RANGE for signal values, forming a CODABLE EXPECTED QUANTITY;

b) a correspondant exclusive selection of elements lying within the RESIDUAL QUANTITY;

c) a selection of elements lying within the EXPECTED QUANTITY and its RESIDUAL QUANTITY, commonly of variable sizes,
in particular to obtain CODE WORDS with corresponding VARIABLE LENGTHS.

3. RANGE PREDICTIVE QUANTIZING METHOD according to claim 2, characterized by the TRANSMISSION of

a) a pure and also successively range dependent EXPECTED QUANTITY CODE,

b) a pure and also successively range dependent RESIDUAL QUANTITY CODE for a RESIDUAL QUANTITY depending on its EXPECTED QUANTITY,

c) MIXED CODE in principle of VARIABLE LENGTH corresponding to the signal adaptively determined quantity ranges.

4. RANGE PREDICTIVE QUANTIZING METHOD according to claim 3, characterized by the REDUCTION of the CODEWORD LENGTH on the base that either jointly or separately

a) an unnecessary precision, especially by further transmission bits for a (successive) correctly estimated TOLERABLE EXPECTED RANGE, is relinquished,

b) depending on a variable width of the EXPECTED RANGE or a RESIDUAL RANGE the code word lengths will vary according to this,

c) depending on subjective or physical or technical requirements or another kind,in particular even arbitrary, a STEPPED ARRANGEMENT or GRADUATION PRINCIPLE is used for the quantization, which is based upon that principle of the EXPECTED QUANTITY and the RESIDUAL QUANTITY, whereby an EXPECTED QUANTITY is based on the principle of at least two EXPECTIVE PARAMETERS (predictions).

5. RANGE PREDICTIVE QUANTIZING METHOD according to one of the claims 2 to 4,characterized by

a) a combination with PCM-methods,

b) a combination with an only tendential or punctual DEVIATION PREDICTION, made in relation to any kind of EXPECTED QUANTITY,

c) a case-dependent or alternating combination or choice of a) and b).

6. RANGE PREDICTIVE QUANTIZING METHOD according to one of the claims 1 to 5, <u>characterized by</u> producing inverse definitions of the quantities or their codings in the way that a signal value will not be expected within an EXPECTED QUANTITY whitch means that a value will fit the REST QUANTITY with high probability.

**Revendications**

1. Procédé de quantification prédicteur pour le codage d'une gamme de valeurs (un DOMAINE) qui, selon un critère défini, est partagé en les ensembles de la QUANTITE A PREVOIR de grande probabilité d'apparition et de la QUANTITE RESIDUELLE de faible probabilité d'apparition, <u>caractérisé par le fait que</u> concernant l'ensemble d'un BLOC d'INFORMATION de données du signal une GAMME DE SES VALEURS est déterminée, étant la marge d'un ensemble de valeurs des points du signal, pour utiliser un DOMAINE QUANTIFIABLE qui est définie par ce fait, pour en former

a) une QUANTITE A PREVOIR pour valeurs du signal tenant compte de tous les paramètres <u>divergents</u> imaginables ainsi que toutes les fonctions de prévision techniquement extractibles du signal, pour en définir

un <u>DOMAINE A PREVOIR reductible pour un BLOC D'INFORMATION du signal</u> selon son étendue délimitée par un minimum et un maximum, sa variance (son étendue, sa gamme) étant <u>quantisée</u> de manières connues,

 -- particulièrement avec un des procédés M I C ou M I C D

 -- ses valeurs de quantification particulièrement choisies selon les cumulations de valeurs du signal (points de cumulation) spécialement représenté par les deux points d'un saut du signal (contour)-

si cela ne devient pas inutile en cas que la variance se réduit à la gamme d'un seule point;

b) Une QUANTITE RESIDUELLE des valeurs du signal en sense de la théorie des ensembles, déterminée conformement du reste en comparaison de la QUANTITE A PREVOIR, cette quantité tenant compte de l'ensemble des valeurs qui restent en cas d'une fausse prédiction, pouvant se trouver totalement ou partiellement à l'intérieur du DOMAINE A PREVOIR.

2. PROCEDE DE QUANTIFICATION PREDICTEUR DE DOMAINES selon la revendication 1, **caractérisé par**

a) une sélection exclusive d'éléments du DOMAINE A PREVOIR pour les valeurs du signal en forme d'une QUANTITE A PREVOIR CODABLE;

b) une sélection conforme exclusive pour obtenir une QUANTITE RESIDUELLE;

c) une sélection d'éléments de la QUANTITE A PREVOIR et de la QUANTITE RESIDUELLE, généralement d'étendues variables, en particulier pour la réalisation de mots-codes pouvant avoir des longueurs variables.

3. PROCEDE DE QUANTIFICATION PREDICTEUR DE DOMAINES selon la revendication 2, **caractérisé par** la transmission

a) d'un CODE PUR DE LA QUANTITE A PREVOIR, pouvant aussi être dépendant successivement de domaines,

b) d'un CODE POUR DE LA QUANTITE RESIDUELLE, pour le codage d'une QUANTITE RESIDUELLE dépendant de cette QUANTITE A PREVOIR, code pouvant aussi être dépendant successivement de domaines,

c) d'un CODE MIXTE, par principe d'une longueur variable selon les étendues des quantités adaptées aux signaux.

4. PROCEDE DE QUANTIFICATION PREDICTEUR DE DOMAINES selon la revendication 3, **caractérisé par** la réduction de la longueur des mots-codes en appliquant les mesures suivantes, seules ou en combinaison:

a) dans le cas d'un DOMAINE A PREVOIR (successivement) estimé correctement, on renonce à une précision supplementaire superflue et notamment à transmettre d'autres bits,

b) en fonction d'une étendue variable du DOMAINE A PREVOIR et du DOMAINE RESIDUEL, on fait varier la longueur des mots-codes,

c) en fonction d'exigences subjectives ou physiques ou alors techniques d'autres genres, en particulier aussi arbitraires, on utilise pour la quantification un PRINCIPE D'ECHANTILLONAGE ou de GRADATION, basé sur ce principe des QUANTITES A PREVOIR et des QUANTITES RESIDUELLES, où une QUANTITE A PREVOIR repose fondamentalement sur au moins deux PARAMETRES PREDICTEURS (prédictions).

5. PROCEDE DE QUANTIFICATION PREDICTEUR DE DOMAINES selon l'une des revendications 2 à 4, **caractérisé PAR**

a) une combinaison avec le procédé M I C,

b) une combinAison avec une PREDICTION DE DEVIATION seulement tendancielLe ou alors ponctuelle, faite relativement à une QUANTITE A PREVOIR quelconque,

c) selon le cas ou en alternance, une combinaison ou un choix de a) et b).

6. PROCEDE DE QUANTIFICATION PREDICTEUR DE DOMAINES selon l'une des revendications 1 à 5, caractérisé par le fait que l'on crée des definitions inverses des quantités et de leur codes en exprimant qu'une valeur du signal n'est pas attendue à l'intérieur de la QUANTITE A PREVOIR, donc qu'une valeur très probable se trouve à l'intérieur de la QUANTITE RESIDUELLE.